# EUROPÄISCHE PATENTSCHRIFT

(11) **EP 1 187 690 B1**
(45) Veröffentlichungstag und Bekanntmachung des Hinweises auf die Patenterteilung: **27.08.2003**
(21) Anmeldenummer: 00947796.9
(22) Anmeldetag: 07.06.2000
(51) Int. Cl.: B22C 23/00

(54) **VERWENDUNG EINES SCHAFTWERKZEUGES MIT FEST ANGEORNETEN FLÜGELARTIGEN EINSÄTZEN**
USE OF A SHAFT TOOL WITH FIXEDLY DISPOSED WING-LIKE INSERTS
UTILISAGE D'UN OUTIL A TIGE COMPORTANT DES INSERTS DE TYPE AILETTE MONTES DE MANIERE FIXE

(30) Priorität: 24.06.1999 DE 19928840
(43) Veröffentlichungstag der Anmeldung: 20.03.2002
(73) Patentinhaber: ACTech GmbH Advanced Casting Technologies Giessereitechnologie, 09599 Freiberg (DE)
(72) Erfinder: HAUSCHILD, Rüdiger, D-09600 Naundorf (DE); HENTSCHEL, Bertram, D-04687 Trebsen (DE); WAGNER, Ralf, D-01723 Kesselsdorf (DE); GANTNER, Detlev, D-09599 Freiberg (DE)
(74) Vertreter: Borchard, Wolfgang
(86) Internationale Anmeldenummer: DE0001888
(87) Internationale Veröffentlichungsnummer: WO01000351

(56) Entgegenhaltungen:
- DE-A- 3 914 074
- DE-A- 4 127 509

## Beschreibung

Die Erfindung betrifft eine Verwendung eines Schaftwerkzeuges mit fest angeordneten flügelartigen Einsätzen zur fräsartigen Bearbeitung von nichtspanbildenden Werkstoffen für die Herstellung von Formen, insbesondere von hitzebeständigen Gießformen für die Fertigung von Gußteilen aus Metall.

Zur Fabrikation von Gußteilen aus Metall werden in der Praxis überwiegend Sandformen eingesetzt, die mit Hilfe von Modellen hergestellt werden. Da die Herstellung von Modellen aufwendig ist, besteht bei kleinen und mittleren Serien seit langem das Bedürfnis, Gießformen durch direktes Bearbeiten von hitzebeständigen Formmassen herzustellen.

In der DE PS 26 05 687 C3 wird zur Herstellung von Sandformen ein Schneid - und Fräswerkzeug zum Aushöhlen eines Formhohlraumes eingesetzt, das mit einer Kopierfräsmaschine in Wirkverbindung steht. Das Fräswerkzeug weist eine Messerbaugruppe mit einem Schneidelement auf, das im wesentlichen einer umgekehrten T - Form entspricht und an einem um eine Rotationsachse rotierenden Arm befestigt ist. Das Schneidelement ist auswechselbar, auf der Außenseite zum Glätten der Formoberfläche entsprechend dem Innendurchmesser der zu erzeugenden Gießform gekrümmt und in Drehrichtung gesehenen an seiner Vorderseite derart geformt, daß eine Schneide gebildet wird. Mittels der Schneide wird ein in einem Formkasten eingestampfter aushärtbarer Grünsand bei geringer Festigkeit von 2 - 5 kg/cm² ausgehöhlt, bevor die endgültige Festigkeit des Formsandes nach dem Aushärten erreicht worden ist. Damit soll ein schneller Verschleiß der Schneide verhindert werden. Der Ablauf des Verfahrens ist verhältnismäßig schwierig zu bewerkstelligen, weil während des Aushärtens der Form der richtige Zeitpunkt für die Bearbeitung gewährleistet werden muß. Anderenfalls wird die Form bei geringer Festigkeit des Formsandes unsauber oder bei hoher Festigkeit wird das Schneidelement schnell unbrauchbar. Darüber hinaus sind die Fräswerkzeuge nur bei der Herstellung von rotationssymmetrischen Teilen verwendbar.

Demgegenüber wurde in der DD 275 419 A1 vorgeschlagen, eine Gießform aus einem einzigen Formstoffblock mit Werkzeugen herauszuarbeiten, die keine Schneidengeometrie aufweisen. Zum Erzeugen eines Hohlraumes in einem Formstoffblock wird eine Vorrichtung verwendet, die einen stabförmigen um eine Achse angetriebenen Mitnehmer beinhaltet, an dem mindestens zwei nicht - oder halbstarre in ihrer Länge veränderbare Trägerelemente geführt werden. An diesen Trägerelementen sind aktive Bearbeitungselemente befestigt, die zur Vermeidung von Unwucht in gleicher Winkelteilung an dem Mitnehmer angeordnet sind. Als aktive Bearbeitungselemente können beispielsweise flächige Teilen wie Dreieckscheiben, Sterne oder ähnliches aber auch Kugeln oder Quader u.a. mit oder ohne Kanten verwendet werden. Als nicht - beziehungsweise halbstarre Trägerelemente werden Seile, Drahtseile, Blechstreifen, Ketten oder ähnliches verwendet, die zum Schutz gegen den durch den abgetragenen Sandformstoff verursachten Verschleiß zusätzlich mit Schutzelementen versehen sind.

Zum Steigern der Abtragsleistung ist es erforderlich, während der Bearbeitung eine möglichst hohe Steifigkeit der Trägerelemente zu erreichen, indem die Bearbeitungselemente verschiebbar angeordnet und gegeneinander verspannt sind. Die Vorrichtung kann rechnergesteuert am Arm eines Roboters geführt werden. Ebenso ist es auch möglich die Vorrichtung durch eine CNC - Maschinen zu steuern. Um die Oberfläche der Gußteile zu verbessern, werden in einem abschließenden Arbeitsschritt die den Formhohlraum einschließenden Innenflächen mit einem Mittel zum Glätten besprüht, das gleichmäßig über die Fläche verteilt werden muß. Auch in diesem Fall ist es nachteilig, daß im wesentlichen nur im groben von rotationssymmetrischen Teilen abweichende Formen realisiert werden können. Nachteilig ist die geringe Oberflächenqualität der mit den Gießformen hergestellten Gußteile, was auf die mehr oder weniger schlagförmige Einwirkung der Werkzeuge zurückzuführen ist.

Gebräuchlich zum Herstellen von Gußformen sind Schaftfräser mit Schneidplatten, die eine kreisförmige Kontur aufweisen. Der in der DE 197 21 900 A1 bezeichnete Schaftfräser hat am freien Ende eine Schneidplatte, die mit Hilfe von Spannschrauben am Schaft befestigt ist. Der Schaft weist einem Plattensitz mit einer Gewindebohrung auf, wobei die Schneidplatte mit einer Durchbohrungen versehen ist. Eine derartige Fixierung stößt jedoch auf Probleme, wenn die Abmessungen der Schneidplatten ein unteres Maß unterschreiten. Es ist daher schwierig, die Schneidplatte zu lösen oder zufriedenstellend zu befestigen. Außerdem ist es nachteilig, daß die Schneidplatte bei nichtspanbildenden Werkstoffen einem hohen Verschleiß ausgesetzt ist. Dadurch ist ein ständiger Werkzeugwechsel erforderlich, der mit einem dementsprechend hohen Aufwand verbunden ist.

Um den bei hohem Verschleiß entstehenden Werkzeugaufwand zu verringern, wurde in der DE 3914074 A1 ein kostengünstig herzustellendes Fräswerkzeug vorgeschlagenen, das einen zylindrischen Schaft und einen ebenen Schneidenträger aufweist. An seinen am weitesten von der Achse des Schaftes entfernten Kanten ist der Schneidenträger mit Schneiden versehen. An der Stirnseite des Schneidenträgers sind zusätzliche frontale Schneidplatten vorgesehen. Der Schaft ist auf einer Seite als Bohrer ausgebildet, damit der Fräser als Stirnfräser fungieren kann. Die Schneiden sind, bezogen auf die Achse des Schaftes, an den radial endseitigen äußeren Kanten der Schneidenträger angeordnet. Der Querschnitt des Fräswerkzeuges zeigt ein S - förmiges mit der Schneide in Schneidrichtung zeigendes Profil. Aus diesem Grunde kann der vorbeschriebene Fräser nur bei spanbildenden Werkstoffen eingesetzt werden. Bei nichtspanbildenden Werkstoffen ist ein Einsatz nicht möglich.

Bindemittelhaltige Gießereisande bewirken einen starken Abnutzungsgrad an der Werkzeugschneide, der durch einen Schneidenverschleiß an den Schneidkanten und Reibverschleiß an den Freiflächen hervorgerufen wird. Aus diesem Grunde ist eine Schneidwirkung nur bei neuen Werkzeugen gegeben und somit zeitlich befristet. Der Schneidenverschleiß wirkt sich als Abrundung der vorderen Kante des Werkzeuges aus, wodurch zusätzlich Reibverschleiß in der hinter der Schneide liegende Zone hervorgerufen wird. Dieser Reibverschleiß nutzt in zunehmender Weise die Außenflächen ab und verformt das Werkzeug nach hinten ansteigend entgegen der Drehrichtung. Die der Reibung entsprechende Energie wird in Wärme umgewandelt, was zu einer Erwärmung des Werkzeugs und zu einem schneller zunehmenden Verschleiß führen kann.

Der vorliegenden Erfindung liegt die Aufgabe zugrunde, ein einfaches und kostengünstig herstellbares Schaftwerkzeug zur fräsartigen Bearbeitung von nichtspanbildenden Werkstoffen für die Herstellung von hitzebeständigen Gießformen, insbesondere bindemittelhaltigen Gußformer aus sand, derart auszubilden, daß es bei einem nicht vermeidbarem Reibverschleiß und bei zunehmender Abnützung funktionsfähig bleibt. Die Bearbeitungswirkung soll über einen längeren Zeitraum beibehalten werden. Die Verluste durch Reibung sollen gesenkt werden.

Erfindungsgemäß wird die Aufgabe mit der Verwendung eines Schaftwerkzeuges mit einem flügelartigen Schneidblatt als Schneideinsatz gemäß Patentanspruch 1 gelöst. Die minimale Blattstärke bewirkt eine wesentliche Reibungsverminderung zwischen den Blattkanten und der Gießformoberfläche, wodurch nicht nur die Abnützung des Schneidblattes vermindert, sondern auch die Lebensdauer des Werkzeuges vergrößert wird. Dadurch ist das Werkzeug insbesondere für die Hochgeschwindigkeitsbearbeitung geeignet, da es massereduziert und bei hohen Drehzahlen die Kühlung der Blattkanten gesteigert ist.

Das zur Verwendung vorgeschlagene Schaftwerkzeug ist aus einfach herstellbaren Halbzeugen zusammengesetzt und auf diese Weise konstengünstig herstellbar, was im nachfolgenden anhand eines Ausführungsbeispiels näher erläutert werden soll. Weitere Vorteile und Ausgestaltungen der Erfindung ergeben sich aus der nachfolgenden Beschreibung und den Unteransprüchen.

In den dazugehörigen Zeichnungen zeigt
Figur 1 ein Schaftwerkzeug mit einem rechteckförmigen Schneidblatt,
Figur 2 ein Schaftwerkzeug mit einem Schneidblatt mit bogenförmiger Blattkante,
Figur 3 ein Schaftwerkzeug mit einem Schneidblatt mit gerundeten Blattkanten,
Figur 4 ein Schaftwerkzeug mit einem Schneidblatt mit abgewinkelten Blattkanten,
Figur 5 ein Schaftwerkzeug mit einem Schneidblatt mit konischen Blattkanten,
Figur 6 ein Schaftwerkzeug mit einem rohrförmigen Schaft,
Figur 7 ein Schaftwerkzeug mit doppelt symmetrisch angeordneten Schneidblättern,
Figur 8 ein Schaftwerkzeug mit einem in Drehrichtung konvex gekrümmten Schneidblatt,
Figur 9 ein Schaftwerkzeug mit einem in Drehrichtung konvex abgewinkelten Schneidblatt,
Figur 10 ein Schaftwerkzeug mit einem in Drehrichtung konvex abgewinkelten Schneidblatt mit schräg angestellten Blattkanten
in schematischer Darstellung.

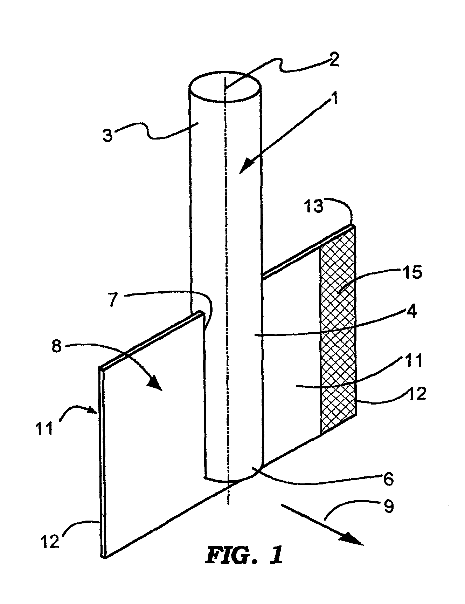

Das in Figur 1 dargestellte Schaftwerkzeug zum fräsartigen Bearbeiten von nichtspanbildenden Werkstoffen, die insbesondere bei der Herstellung von hitzebeständigen Gießformen für Gußteile aus Metall grobkristallinen Sand enthalten können, besteht im wesentlichen aus zwei einfachen Teilen, die in geeigneter Weise z. B. durch formschlüssiges Zusammenlegen, Schweißen, Löten oder Kleben zusammengefügt sind.

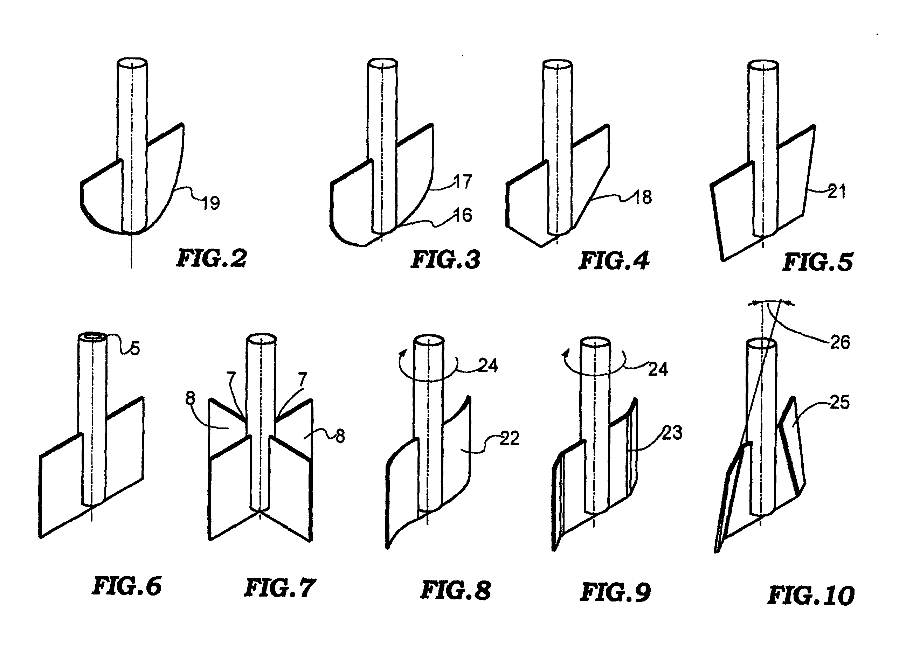

Der um seine Längsachse 2 drehbare längliche und zylinderförmige Schaft 1 weist einen oberen Schaftendabschnitt 3 auf, welcher lösbar mit einer Werkzeugaufnahme für rundlaufende Zerspanungswerkzeuge verbindbar ist. Nach Figur 6 ist der Schaft 1 rohrförmig als Hohlkörper 5 ausgebildet. Ein rohrförmiger Hohlkörper 5 bietet eine erhebliche Gewichtseinsparung, die sich vor allem bei sehr hohen Drehzahlen besonders vorteilhaft bemerkbar macht. Ein weiter Vorteil kann darin bestehen, daß der Schaft 1 zumindest im Bereich der Schneidblatthalterung 4 als ein rohrförmiger Hohlkörper 5 ausgebildet ist. Auf diese Weise kann der Hohlkörper 5 beim Bearbeiten von tiefen Teilen mit einem passenden zylinderförmigen Schaftendabschnitt 3 verlängert werden.

An seinem freien Endabschnitt 6 beziehungsweise im Bereich der Schneidblatthalterung 4 ist der Schaft 1 mit einer sich in Axialrichtung erstreckenden nutartigen Ausnehmung 7 zur Aufnahme des Schneidblattes 8 versehen. Nach Figur 7 sind beispielhaft zwei nutartige Ausnehmungen 7 vorgesehen, so daß zwei Schneidblätter 8 doppeltsymmetrisch angeordnet sind. Bei einem rohrförmigen Hohlkörper 5 können die Schneidblätter 8 durch zwei gegenüberliegende halbe Einschnitte in der Längsachse 2 durch Zusammenstecken in sich verschachtelt und auf besonders einfache Weise, beispielsweise durch Löten, in der Ausnehmung 7 befestigt werden. Dadurch ist bei hohen Drehzahlen ein sicherer Halt gewährleistet.

Das Schneidblatt 8 kann als Stanzteil aus einem flachen Zuschnitt aus Stahlblech oder verschleißfestem Stahlblech durch Stanzen erzeugt werden, wobei die Erfindung nicht auf die genannten Ausführungsbeispiele beschränkt werden soll. Vielmehr sind auch nicht genannte geeignete Werkstoffe und Halbzeuge einsetzbar, soweit sie im Rahmen der Patentansprüche liegen. Insbesondere betrifft dies Verbundwerkstoffe, Faserverbund - Werkstoffe oder hochfeste Werkstoffe beziehungsweise keramische oder faserverbundkeramische Elemente.

Das Schneidblatt 8 gemäß Figur 1 ist in Vorschubrichtung 9 gesehen auf der vorderen Flachseite 11 mit einer nichtschneidenden Blattkante 12 versehen, die rechtwinklig zur Flachseite 11 angeordnet ist, wenn ein einfaches Stanzteil verwendet wird. In diesem Fall kann die Blattstärke vergleichsweise gering ausgeführt werden. Die Blattstärke kann 0,1 mm - 5,00 mm betragen. Vorzugsweise soll die Blattstärke 0,2-1,00 mm betragen.

Insbesondere soll die Blattstärke nicht größer ausgewählt werden, damit der Tangentialwinkel der Freifläche der vorderen Blattkante 12 nahe oder gleich Null ist. Beim Einsatz von hochfesten Werkstoffen oder bei Verwendung von Verbundwerkstoffen kann die Blattkante 12 und die in Vorschubrichtung 9 gesehen hinter der Blattkante 12 liegende Hinterkante 13 des Schneidblattes 8 mit einem Radius versehen oder abgerundet werden. Bei einem geringen Tangentialwinkel und durch die Abrundung wird die Reibungswärme und der Verschleiß verringert.

Eine zusätzliche Verringerung der Reibung im Bereich der Hinterkante 13 kann mit einem Schneidblatt 8 erreicht werden, das einen Grundwerkstoff aus Stahl aufweist und auf der vorderen Flachseite 11 mit einem Verschleißschutzbelag 15 mit einer höheren Festigkeit verbunden ist. Als Verschleißschutzbelag 15 können beliebige Hartstoffe oder Hartstoffe enthaltende Metallverbindungen oder eine Hartstoffe enthaltende Metall - Legierung beziehungsweise Verbundwerkstoffe vorgesehen werden. Durch den auf der vorderen Flachseite 11 aufgetragenen Verschleißschutzbelag 15 wird der Verschleiß an der Blattkante 12 geringer. Die auf dem Schneidblatt 8 aus Stahl liegende Hinterkante 13 nutzt sich aufgrund der geringeren Festigkeit stärker ab, wodurch eine Abrundung der Freifläche entsteht, die einen geringen Reibwiderstand aufweist.

Das Schneidblatt 8 kann vielförmig gestaltet werden. Damit können bei der Bearbeitung von Gießformen beim Einsatz von CNC - gesteuerten Werkzeugmaschinen mit automatischem Werkzeugwechsel unterschiedliche Schaftwerkzeuge hintereinander eingesetzt werden, wodurch die Herstellung komplizierter Formen wesentlich vereinfacht werden kann. Der Grundform nach weist das Schneidblatt 8 nach Figur 1 und Figur 3 - 10 einen quadratischen oder rechteckigen Zuschnitt auf. In Figur 3 ist das Schneidblatt 8 an seiner Stirnseite 16 mit einer Abrundung 17 oder in Figur 4 stirnseitig mit winkelförmig angeschnittenen Ecken 18 versehen.

Das Schneidblatt 8 nach Figur 2 weist eine Außenkontur auf, welche die Form eines Kreisbogens 19 aufweist und in Figur 5 ist die Kontur eines Trapezes 21 erkennbar, das bei Rotation um die Längsachse 2 des Schaftwerkzeuges einen Kegel ergibt.

In einer besonders vorteilhaften Ausgestaltung des Schaftwerkzeuges kann das Schneidblatt 8 parallel zur Längsachse 2 gemäß Figur 8 eine konvexe Krümmung 22 oder nach Figur 9 eine konvexe Abkantung 23 in Drehrichtung 24 aufweisen. Wenn das Schneidblatt 8 aus einem elastisch verformbaren oder federnden Blattmaterial mit geringer Blattstärke ausgebildet ist, kann die vorhandene Krümmung 22 bei höheren Drehzahlen, wie bei der Hochgeschwindigkeits - Bearbeitung, verringert werden. Auf diese Weise kann der Werkzeugradius bei zunehmenden Verschleiß des Schneidblattes 8 durch eine Drehzahlerhöhung konstant gehalten werden. Für dieses Verfahren sind insbesondere metallische Schneidblätter 8 geeignet, die eine hohe Verschleißfestigkeit aufweisen. Mit Hilfe der aufgezeigten Schaftwerkzeuge können unter Verwendung von Formsand filigrane Gießformen hergestellt werden, die eine sehr glatte Formoberfläche aufweisen.

Um die beim Abtragen des Werkstoffes entstehenden Bearbeitungsrückstände zu beseitigen ist es vorteilhaft, wenn das Schneidblatt 8 zum Erzielen einer Ventilatorwirkung schaufelartige Blattabkantungen 25 gemäß Figur 10 aufweist, bei denen ein Blattwinkel 26 gegenüber der Längsachse 2 vorgesehen ist. Die abgetragenen Werkstoffreste können so hauptsächlich in Axialrichtung von der Bearbeitungsstelle weg transportiert werden.

## Patentansprüche

1. Verwendung eines Schaftwerkzeugs mit fest angeordneten flügelartigen Einsätzen zur fräsartigen Bearbeitung von nichtspanbildenden Werkstoffen für die Herstellung von hitzebeständigen Gießformen, insbesondere von bindemittelhaltigen Sandformen für die Fertigung von Gußteilen aus Metall, sowie mit einem um seine Längsachse (2) drehbaren Schaft (1), welcher lösbar mit einer Antriebseinrichtung verbindbar und an seinem freien Endabschnitt (6) mit zumindest einer sich in Axialrichtung erstreckenden nutartigen Ausnehmung (7) und einem flachen Schneidblatt (8) versehen ist, das in Vorschubrichtung (9) gesehen auf der Vorderseite mit einer nichtschneidenden Blattkante (12) versehen ist.

2. Verwendung nach Patentanspruch 1, **dadurch gekennzeichnet, daß** das Schneidblatt (8) als Stanzteil aus einem flachen Zuschnitt aus Stahl, verschleißfestem Stahl oder einem geeigneten verschleißfesten Werkstoff durch Stanzen erzeugt und mit einer rechtwinklig zur Flachseite (11) stehenden Blattaußenfläche versehen ist.

3. Verwendung nach Patentanspruch 1 bis 2, **dadurch gekennzeichnet, daß** die Blattkante (12) und die in Vorschubrichtung (9) gesehen hinter der Blattkante (12) liegende Hinterkante (13) des Schneidblattes (8) mit einem Radius versehen oder abgerundet ist.

4. Verwendung nach Patentanspruch 1 bis 3, **dadurch gekennzeichnet, daß** das Schneidblatt (8) der Grundform nach einen quadratischen oder rechteckigen Zuschnitt aufweist und /oder stirnseitig mit Abrundungen (17) oder winkelförmig angeschnittenen Ecken (18) versehen ist.

5. Verwendung nach Patentanspruch 1 bis 3, **dadurch gekennzeichnet, daß** das Schneidblatt (8) mit einer kreisbogenförmigen oder kegelförmigen Außenkontur versehen ist.

6. Verwendung nach Patentanspruch 1 bis 5, **dadurch gekennzeichnet, daß** das Schneidblatt (8) parallel zur Längsachse (2) mit einer Krümmung (22) oder einer Abkantung (23) versehen ist, wobei die konvexe Seite der Krümmung (22) beziehungsweise der Abkantung (23) in Drehrichtung (24) zeigend angeordnet ist.

7. Verwendung nach Patentanspruch 1 bis 6, **dadurch gekennzeichnet, daß** das Schneidblatt (8) zum Erzielen einer Ventilatorwirkung schaufelartige Blattabkantungen (25) aufweist, die mit einem Blattwinkel (26) gegenüber der Längsachse (2) geneigt angeordnet sind.

8. Verwendung nach Patentanspruch 1 bis 7, **dadurch gekennzeichnet, daß** das Schneidblatt (8) aus einem metallischen, eine hohe Festigkeit aufweisenden elastisch verformbaren oder federnden Blattmaterial gebildet ist.

9. Verwendung nach einem oder mehreren der Patentansprüche 1 bis 8, **dadurch gekennzeichnet, daß** das Schneidblatt (8 ) einen Grundwerkstoff aus Stahl aufweist und auf der vorderen Flachseite (11) mit einem Verschleißschutzbelag (15) aus einem Hartstoff oder Hartstoffe enthaltenden Metallverbindung oder einer Hartstoffe enthaltenden Metall - Legierung versehen ist.

10. Verwendung nach einem oder mehreren der Patentansprüche 1 bis 9, **dadurch gekennzeichnet, daß** der Schaft (1) zumindest im Bereich der Schneidblatthalterung (4) einen rohrförmigen beziehungsweise zylinderförmigen Hohlkörper (5) aufweist.

## Claims

1. Use of a shaft tool with fixedly disposed wing-like inserts for the milling-like machining of materials without chip production, for the manufacture of heat-resistant casting moulds, in particular of sand mould containing binding agents for the manufacture of casting moulds made of metal, as well as a shaft (1) rotatable about a longitudinal axis (2), which is capable of being connected in a releasable mariner to a drive device and is provided at its free end with at least one cut-out (7) in the form of a groove extending in an axial direction, and a flat cutting blade (8) which, seen in the direction of feed (9), is provided on the front face with a non-cutting blade edge (12).

2. Use according to Patent Claim 1, **characterised in that** the cutting blade (8) is a stamped part from a flat cut piece of steel, wear-resistant steel, or a suitable wear-resistant material produced by stamping, and with an outer blade surface standing at right angles to the flat side (11).

3. Use according to Patent Claims 1 to 2, **characterised in that** the blade edge (12) and the rear edge (13) of the cutting blade (8) located behind the blade edge (12) when seen in the direction of feed is provided with a radius or rounded.

4. Use according to Patent Claims 1 to 3, **characterised in that** the cutting blade (8) has the basic form of a square or rectangular blank and/or is provided on the face with roundings (17) or corners (18) cut to form angles.

5. Use according to Patent Claims 1 to 3, **characterised in that** the cutting blade (8) is provided with an arc-shaped or spherical external contour.

6. Use according to Patent Claims 1 to 5, **characterised in that** the cutting blade (8) is provided with a curvature (22) or a fold (23) parallel to the longitudinal axis (2), whereby the convex side of the curvature (22) or fold (23) respectively is arranged pointing in the direction of rotation (24).

7. Use according to Patent Claims 1 to 6, **characterised in that** the cutting blade (8) exhibits shovel-shaped blade edges (25) to achieve a fan effect, these being arranged with a blade angle (26) inclined opposite the longitudinal axis (2).

8. Use according to Patent Claims 1 to 7, **characterised in that** the cutting blade (8) is formed from a metallic blade material, exhibiting high strength and capable of elastic deformation or springing.

9. Use according to one or more of Patent Claims 1 to 8, **characterised in that** the cutting blade (8) exhibits a basic material of steel and is provided on the front flat face (11) with a wear protection covering (15) of a metal compound containing a hard solid or solids, or a metal alloy containing hard solids.

10. Use according to one or more of Patent Claims 1 to 9, **characterised in that** the shaft (1) exhibits at least in the area of the cutting blade mount (4) a tubular or cylindrical hollow body (5).

## Revendications

1. Utilisage d'un outil à tige comportant des inserts de type ailette montés de manière fixe pour usinage type fraisage de matériaux ne formant pas de copeaux pour fabrication de moule de coulée, en particulier de moules en sable contenant un liant pour la fabrication de pièces coulées en métal ainsi qu'avec une tige (1) pivotant autour de son axe longitudinal (2) reliée de façon amovible à un dispositif d'entraînement et pourvue à son extrémité libre d'au moins une cavité (7) en forme de rainure s'étendant en direction axiale et d'une plaque de coupe plate (8) qui, vue dans le sens de l'avance, est pourvue d'une arête de plaque non coupante (12) à la partie avant.

2. Utilisage selon la revendication 1 **caractérisé en ce que** la plaque de coupe (8) est produite en tant que pièce découpée à partir d'une découpe plate en acier, en acier résistant à l'usure ou en un matériau approprié résistant à l'usure et pourvue d'une surface extérieure de plaque se trouvant perpendiculairement par rapport au côté plat (11).

3. Utilisage selon les revendications 1 à 2 **caractérisé en ce que** le bord de plaque (12) et le bord arrière (13) se trouvant, vu dans le sens du dispositif d'avance (9), derrière le bord de plaque (12) de la plaque de coupe (8) est pourvue d'un rayon ou arrondie.

4. Utilisage selon les revendications 1 à 3 **caractérisé en ce que** la plaque de coupe (8) selon la forme de base présente une découpe carrée ou rectangulaire et/ou est pourvue à la partie frontale d'arrondis (17) ou de coins (18) coupés en forme d'angle.

5. Utilisage selon les revendications 1 à 3 **caractérisé en ce que** la plaque de coupe (8) est pourvue d'un contour extérieur en forme d'arc de cercle ou de cône.

6. Utilisage selon les revendications 1 à 5 **caractérisé en ce que** la plaque de coupe (8) est pourvue parallèlement à l'axe longitudinal (2) d'une courbure (22) ou d'un chanfrein (23), le côté convexe de la courbure (22) voire du chanfrein (23) étant placé orienté vers le sens de rotation (24).

7. Utilisage selon les revendications 1 à 6 **caractérisé en ce que** la plaque de coupe (8) présente des chanfreins de plaque (25) en forme de pelle afin d'obtenir un effet de ventilateur placés avec un angle de plaque (26) incliné par rapport à l'axe longitudinal (2).

8. Utilisage selon les revendications 1 à 7 **caractérisé en ce que** la plaque de coupe (8) est formée à partir d'un matériau de plaque métallique présentant une grande résistance déformable élastiquement ou élastique.

9. Utilisage selon une ou plusieurs revendications 1 à 8 **caractérisé en ce que** la plaque de coupe (8) présente un matériau de base en acier et est pourvue à la partie plate avant (11) d'un revêtement de protection anti-usure (15) en une combinaison métallique contenant un matériau dur ou des matériaux durs ou en alliage métallique contenant des matériaux durs.

10. Utilisage selon une ou plusieurs revendications 1 à 8 **caractérisé en ce que** la tige (1) présente au moins dans la zone de support de plaque de coupe (4) un corps creux (5) de forme tubulaire voire cylindrique.
